# EUROPÄISCHE PATENTANMELDUNG

(11) **EP 0 535 715 A2**
(43) Veröffentlichungstag der Anmeldung: **07.04.1993**
(21) Anmeldenummer: 92120381.6
(22) Anmeldetag: 03.11.1988
(51) Int. Cl.: A61C 17/04, B04B 1/02

(54) **Abscheider**

(30) Priorität: 03.11.1987 AT 2888/87
(62) Teilanmeldung aus: 88909265.6
(71) Anmelder: Trawöger, Werner, A-6173 Oberperfuss (AT); PREGENZER, Bruno, A-6173 Oberperfuss (AT)
(72) Erfinder: Trawöger, Werner, A-6173 Oberperfuss (AT); PREGENZER, Bruno, A-6173 Oberperfuss (AT)
(74) Vertreter: Hofinger, Engelbert, DDr.

(57) **Zusammenfassung**

Zur Trennung eines dentalen Feststoff-Flüssigkeitsgemisches wird eine bei Stillstand selbstentleerende Vollmantelzentrifuge (2) verwendet, die einen unterhalb der Zentrifuge angeordneten Absetzbehälter (16) für die nach jeder Zentrifugenphase unter Schwerkrafteinwirkung mit einem Restflüssigkeitsanteil abfließenden Feststoffe aufweist. Dem Absetzbehälter (16) ist eine mit der Zentrifuge (2) koaxiale Pumpe (11) zugeordnet, mit deren Hilfe Restflüssigkeit aus den in einem Absetzbehälter (16) sedimentierenden Feststoffen dem Gemischeinlaß (4) der Zentrifuge (2) zugeführt wird.

## Beschreibung

Die Erfindung betrifft einen Abscheider nach dem Oberbegriff des Patentanspruches 1.

Ein derartiger Abscheider ist beispielsweise der WO-A-86/03669 zu entnehmen. Dort wird der Zentrifuge das zu trennende Gemisch entweder aus einer ersten Abscheidestufe oder direkt zugeführt, wobei die aus der Zentrifuge in den Auffangraum abfließenden Feststoffe gemeinsam mit der Restflüssigkeit mittels des Unterdruckes einer zentralen Sauganlage in den Absetzbehälter überführt werden, aus dem die Restflüssigkeit wieder dem Zentrifugeneinlaß zugeführt wird.

Weiters ist der nachveröffentlichten EP-A-263 344 ein Abscheider zu entnehmen, der unterhalb des Feststoffablaufes einen abnehmbaren Absetzbehälter mit einer vorgegebenen Sedimentationshöhe aufweist. In ein seitliches Abteil des Absetzbehälters taucht das Ansaugrohr einer Rückförderpumpe, deren Druckrohr in die Gemischzufuhrleitung mündet. Dort wird die Restflüssigkeit von der das Gemisch einbringenden Speisepumpe erfaßt und gemeinsam mit diesem wieder in die Zentrifuge eingebracht. Die Gemischzuführleitung verläuft dabei zentral durch den Feststoffablauf ins Innere der Zentrifuge.

Die DE-A-30 30 614, DE-A-35 21 929, DE-A-35 42 115, DE-A-35 42 133, DE-A-35 42 134 oder DE-A-36 01 254 zeigen Zentrifugen, aus denen ebenfalls bei Stillstand die Feststoffe und ein Restflüssigkeitsanteil in durch einen an der Unterseite der Zentrifuge angeordneten Stutzen in einen Absetzbehälter abfließen. Die sich sammelnde Restflüssigkeit wird zu Beginn jeder weiteren Zentrifugierphase über den Stutzen des Feststoffablaufs wieder in die Zentrifuge zurückgesaugt. Trotz im Absetzbehälter angeordneter Beruhigungsflügel wird die Sedimentation der Feststoffe bei jeder Rücksaugung der Restflüssigkeit in die Zentrifuge empfindlich gestört.

Die Aufgabe der Erfindung besteht nun darin, die Rückführung der Restflüssigkeit in die Zentrifuge unabhängig vom Betrieb einer Sauganlage und ohne direkte Rücksaugung durch den Feststoffauslaß zu bewirken.

Erfindungsgemäß wird dies nun dadurch erreicht, daß die Pumpe dem Absetzbehälter zugeordnet ist und ein Ansaugrohr aufweist, das sich bis oberhalb einer maximalen, vorgegebenen Sedimentationshöhe nach unten in den Absetzbehälter erstreckt, und daß von der Druckseite der Pumpe die Leitung zum Gemischeinlaß der Zentrifuge führt. Die Verwendung einer eigenen Pumpe erlaubt es, diese hinsichtlich der gewünschten Pumpenkriterien zu bestimmen, das heißt es können die Pumpenleistung, der Querschnitt der von der Druckseite ausgehenden Leitung usw. den günstigsten Bedingungen im Absetzbehälter angepaßt werden. Über das insbesondere vertikal in den Absetzbehälter eintauchende Ansaugrohr kann die Restflüssigkeit möglichst schonend aus der bestgeklärten Zone abgesaugt werden. Auf diese Weise wird nur ein sehr geringer Anteil an noch schwebenden Feststoffen in die Zentrifuge zurückgeführt.

Die dem Absetzbehälter zugeordnete Pumpe ist bevorzugt eine mit der Zentrifuge koaxiale Flügelradpumpe mit gekoppeltem oder unabhängigem Antrieb.

Nachstehend wird nun die Erfindung anhand der Figuren der beiliegenden Zeichnungen näher beschrieben, ohne darauf beschränkt zu sein.

Es zeigen:

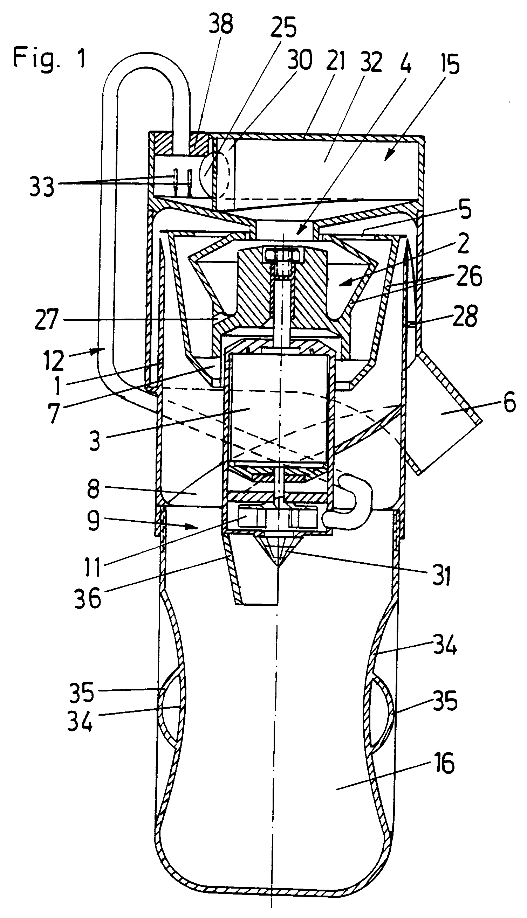

Fig. 1 einen Längsschnitt entsprechend der Linie I-I von Fig. 2 durch einen erfindungsgemäßen Abscheider, und
Fig. 2 eine Draufsicht auf die Ausführung nach Fig. 1.

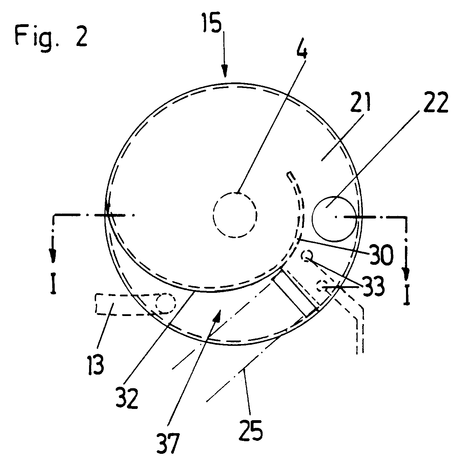

Ein erfindungsgemäßer Abscheider weist ein Gehäuse 1 auf, in dem eine Zentrifuge 2 und unterhalb der Zentrifuge 2 ein abnehmbarer Absetzbehälter 16 vorgesehen ist, der einen Auffangraum 9 aufweist. Die Zentrifuge 2 ist an der Oberseite mit einem zentralen Einlaß 4 für das zu trennende Feststoff-Flüssigkeitsgemisch versehen, das über ein Zulaufrohr 25 (Fig. 2) und eine Gemischeinlaßkammer 15 zum Einlaß 4 gelangt. Die Zentrifuge 2 weist zwei in Durchflußrichtung in Serie angeordnete Vollmäntel 26 mit konvexen Erzeugenden auf, die jeweils eine Zentrifugenkammer definieren. Zwischen den beiden Zentrifugenkammern sind Durchtrittsöffnungen 27 vorgesehen, und die äußere Zentrifugenkammer weist einen oberen Flüssigkeitsauslaß 5 mit einer angeschlossenen Abflußleitung 6 auf, in der steil ansteigend ein einer Schraubenlinie folgender Leitsteg 28 angeordnet ist. An der Unterseite des äußeren Mantels 26 sind Abflußöffnungen 7 des Feststoffauslasses ausgebildet, durch die bei Stillstand der Zentrifuge 2 die abzentrifugierten Feststoffe aus beiden Zentrifugenbehältern zusammen mit etwas Restflüssigkeit über einen Trichter 8 in den Auffangraum 9 abfließen. Der Trichter 8 ist dabei asymmetrisch ausgebildet und umschließt den abgekapselten Antriebsmotor 3 der Zentrifuge 2.

Wie insbesondere aus Fig. 2 ersichtlich, ist die Gemischeinlaßkammer 15 über etwa ein Drittel des Umfangs mit einem spiralig nach einwärts geführten Außenwandabschnitt 32 versehen, sodaß in diesem Bereich eine äußere Abstufung 37 gegeben ist. In der Verlängerung des Außenwandabschnittes 32 verläuft eine kurze Trennwand 30 kreisbogenförmig an der Einstecköffnung 22 vorbei, sodaß ein Ringkanaleinlauf das Zulaufrohr 25 verlängert. In diesem Bereich sind Meßfühler 33 angeordnet. Eine Zuführleitung 12 aus dem Absetzbehälter 16 mündet in die Gemischeinlaßkammer 15, in deren Abdeckung 21 sie mittels eines in die Einstecköffnung 22 eingesetzten Ringes 38 dichtend eingesetzt ist. Mittels der Meßfühler 33 wird die Zentrifuge 2 entweder bei einer Gemischzufuhr über das Zulaufrohr 25 oder bei einer Flüssigkeitszufuhr über die Leitung 12 in Betrieb gesetzt. Die Pumpe 11, die mit dem Zentrifugenmotor gekoppelt ist, wird dabei gleichzeitig in Betrieb gesetzt. Sie weist ein vertikal nach unten in den Absetzbehälter 16 ragendes Ansaugrohr 31 auf, dessen Eintrittsöffnung mit einem Sieb versehen ist und oberhalb einer maximalen Feststoffablagerungshöhe liegt. Zum Auslaß des Trichters 8 hin ist das Ansaugrohr 31 durch eine Tauchwand 36 abgeschotet. Die Leitung 12 führt von der Druckseite der Pumpe 11 zurück zur Gemischeinlaßkammer 15. Feststoffe aus der Zentrifuge 2 fallen in den Absetzbehälter 16, aus dem die überstehende Flüssigkeit von der Pumpe 11 in den Gemischeinlaß 4 der Zentrifuge 2 eingespeist wird. Da der Füllstand im Absetzbehälter 16 bei dessen Abnahme gegebenenfalls so hoch sein kann, daß Flüssigkeit verschüttet werden könnte, ist der Absetzbehälter 16 mit zwei Wandungsabschnitten 34 versehen, die in den Absetzbehälter 16 einspringen und jeweils einen Griff 35 aufweisen. Vor der Abnahme werden die Wandungsabschnitte 34 mittels der Griffe 35 nach außen gestülpt, wodurch sich das Volumen des Absetzbehälters 16 vergrößert und der Flüssigkeitsspiegel auf eine Höhe absinkt, die die problemlose Abnahme gestattet.

Der Abscheider kann zusätzlich eine Luftabscheideeinrichtung 49 aufweisen, sodaß auch von einer Sauganlage kommendes Sauglaft-Flüssigkeits-Feststoffgemisch in seine Bestandteile getrennt werden kann.

## Patentansprüche

1. Abscheider zur Trennung eines Feststoff-Flüssigkeitsgemisches, insbesondere von dentalem Abwasser, mit einer Vollmantelzentrifuge (2), die einen Gemischeinlaß (4), einen Auslaß (6) für die abgetrennte Flüssigkeit und einen Feststoffablauf (8) aufweist, mit einem unterhalb des Feststoffablaufes (8) abnehmbar angeordneten Absetzbehälter (16) für die nach jeder Zentrifugierphase unter Schwerkrafteinwirkung mit einem Restflüssigkeitsanteil abfließenden Feststoffe, und mit einer eine Pumpe (11) umfassenden Einrichtung zur Wiederzuführung der oberhalb der sedimentierenden Feststoffe sich sammelnden Restflüssigkeit in die Zentrifuge (2), die zwischen dem Absetzbehälter (16) und dem Gemischeinlaß (4) der Zentrifuge (2) eine Leitung (12) aufweist, dadurch gekennzeichnet, daß die Pumpe (11) dem Absetzbehälter (16) zugeordnet ist und ein Ansaugrohr (31) aufweist, das sich bis oberhalb einer maximalen, vorgegebenen Sedimentationshöhe nach unten in den Absetzbehälter (16) erstreckt, und daß von der Druckseite der Pumpe (11) die Leitung (12) zum Gemischeinlaß (4) der Zentrifuge (2) führt.

2. Abscheider nach Anspruch 1, dadurch gekennzeichnet, daß die Pumpe (11) koaxial mit der Zentrifuge (2) dem Absetzbehälter (16) zugeordnet ist.

3. Abscheider nach Anspruch 1 oder 2, dadurch gekennzeichnet, daß die Pumpe (11) eine mit der Zentrifuge (2) koaxiale Kreiselpumpe ist.

4. Abscheider zur Trennung eines Feststoff-Flüssigkeitsgemisches, insbesondere von dentalem Abwasser, mit einer Vollmantelzentrifuge (2), die einen Gemischeinlaß (4), einen Auslaß (6) für die abgetrennte Flüssigkeit und einen Feststoffablauf (8) aufweist, mit einem unterhalb des Feststoffablaufes (8) abnehmbar angeordneten Absetzbehälter (16) für die nach jeder Zentrifugierphase unter Schwerkrafteinwirkung mit einem Restflüssigkeitsanteil abfließenden Feststoffe, und mit einer eine Pumpe (11) umfassenden Einrichtung zur Wiederzuführung der oberhalb der sedimentierenden Feststoffe sich sammelnden Restflüssigkeit in die Zentrifuge (2), die zwischen dem Absetzbehälter (16) und dem Gemischeinlaß (4) der Zentrifuge (2) eine Leitung (12) aufweist, dadurch gekennzeichnet, daß die Pumpe (11) koaxial mit der Zentrifuge (2) dem Absetzbehälter (16) zugeordnet ist, und ein Ansaugrohr (31) aufweist, das sich bis oberhalb einer maximalen, vorgegebenen Sedimentationshöhe nach unten in den Absetzbehälter (16) erstreckt, und daß von der Druckseite der Pumpe (11) die Leitung (12) zum Gemischeinlaß (4) der Zentrifuge (2) führt.

5. Abscheider nach Anspruch 4, dadurch gekennzeichnet, daß die Pumpe (11) eine mit der Zentrifuge (2) koaxiale Kreiselpumpe ist.
